# EUROPÄISCHE PATENTSCHRIFT

(11) **EP 3 353 581 B1**
(45) Veröffentlichungstag und Bekanntmachung des Hinweises auf die Patenterteilung: **30.03.2022**
(21) Anmeldenummer: 16775589.1
(22) Anmeldetag: 22.09.2016
(51) Int. Cl.: G02B 5/02, F21V 5/00, G02F 1/1335, G02B 5/04

(54) **OPTISCHE SCHICHT UND LEUCHTE MIT EINER SOLCHEN**
OPTICAL LAYER AND LIGHT FIXTURE WITH SUCH AN OPTICAL LAYER
COUCHE OPTIQUE ET LUMINAIRE COMPRENANT UNE TELLE COUCHE

(30) Priorität: 24.09.2015 CH 13822015
(43) Veröffentlichungstag der Anmeldung: 01.08.2018
(73) Patentinhaber: Regent Beleuchtungskörper AG, 4053 Basel (CH)
(72) Erfinder: REUTTER, Kornelius, 4056 Basel (CH); FERNANDEZ, Oscar, 4133 Pratteln (CH); FERRINI, Rolando, 3006 Bern (CH); HOCHFILZER, Christian, 4059 Basel (CH); DREYFUS, Thierry, 4052 Basel (CH)
(74) Vertreter: Latscha Schöllhorn Partner AG
(86) Internationale Anmeldenummer: PCT/EP2016/072591
(87) Internationale Veröffentlichungsnummer: WO 2017/050923

(56) Entgegenhaltungen:
- EP-A1- 2 647 904
- US-A1- 2005 058 947
- US-A1- 2013 070 478
- US-A1- 2013 107 575

## Beschreibung

### Technisches Gebiet

Die Erfindung betrifft eine optische Schicht gemäss dem Oberbegriff des unabhängigen Anspruchs 1 sowie eine Leuchte mit einer solchen optischen Schicht. Optische Schichten aus einem lichtdurchlässigen Material mit einer Oberfläche und einer optischen Mikrostruktur, die eine Vielzahl von Erhebungen umfasst, wobei die Erhebungen der Mikrostruktur von einer Referenzebene abstehen, die parallel zur Oberfläche liegt, können zu einem anwendungsspezifischen und effizienten Formen von ab- beziehungsweise ausgestrahltem Licht eingesetzt werden.

### Stand der Technik

Zur Anpassung und Einstellung der Lichteigenschaften von Leuchten ist es bekannt, mit Strukturen ausgestattete, transparente Optiken einzusetzen. Dabei decken die Optiken ein oder mehrere Leuchtmittel so ab, dass vom Leuchtmittel abgestrahltes Licht die Optik durchdringt und von dieser angepasst wird. Beispielsweise kann eine solche Anpassung ein Richten des Lichts, ein Dämpfen des Lichts, ein Färben des Lichts, ein Streuen des Lichts oder ähnliches umfassen.

Bekanntermassen werden solche Optiken hergestellt, indem die Strukturen direkt in einem festen Substrat der Optik ausgeformt werden. Beispielsweise können die Strukturen in das Substrat der Optik geschliffen werden.

Eine andere effiziente Art der Bereitstellung von Optiken ist es, ein lichtdurchlässiges Substrat mit einer Licht- beziehungsweise Leuchteigenschaften anpassenden optischen Schicht zu versehen. Das Substrat kann dabei ein transparenter fester Kunststoff, Glas oder dergleichen sein. Indem das Substrat mit einer optischen Schicht versehen wird, kann es auf effiziente Weise mit anwendungsbezogenen Eigenschaften ausgestattet werden. Auch lässt sich so eine wunschgemässe Optik mit verhältnismässig geringem Aufwand herstellen.

Beispielsweise sind Folien als optische Schichten bekannt, die auf ein Substrat aufgebracht wie beispielsweise aufgeklebt oder aufgelegt werden. Dazu können die Folien selbst bereits auf einer Seite klebend sein oder die Folien können in einem Herstellungsschritt der Optik mit einem zusätzlichen Klebstoff am Substrat befestigt werden. Solche Folien sind teilweise zur Streuung oder Dämpfung des Lichts vorgesehen.

In der WO 2012/141899 A1 ist eine Ausführung einer solchen Folie beschrieben. Die Folie ist aus einem lichtdurchlässigen Material hergestellt und weist eine Oberfläche und eine optischen Mikrostruktur auf. Die optische Mikrostruktur besteht aus einer Vielzahl von Erhebungen, die von der Oberfläche abstehen. Die Erhebungen der Mikrostruktur der Folie sind gemäss der Lehre der WO 2012/141899 A1 als Konen, Prismen oder Pyramiden ausgestaltet, deren Seiten einen zufälligen und variierenden Basiswinkel aufweisen. Dieser Basiswinkel entspricht dem Winkel zwischen einer Richtung orthogonal zur Oberfläche der Folie und der zugehörigen Seite der Erhebung. Er soll einen zufälligen, zwischen 10° und 60° liegenden Wert aufweisen. Der mit der Folie bestückten Optik soll die Mikrostruktur einerseits dazu verhelfen, durchdringendes Licht zu entblenden, indem das Licht von Seiten der Erhebungen der Mikrostruktur gerichtet wird. Andererseits soll der zufällige Basiswinkel der Erhebungen dazu dienen, dass die Lichtquelle weniger beziehungsweise gar nicht mehr sichtbar ist, was insbesondere bei LED-Leuchtmitteln ein Anliegen sein kann.

Nachteilig bei Folien beziehungsweise optischen Schichten der vorstehend beschriebenen Art ist, dass insbesondere bei ihrer Verwendung in einer Leuchte zur Erzeugung eines flächigen Lichts eine verhältnismässig tiefe Effizienz in der Fläche erreicht wird. Auch kann mit solchen Folie eine Lichtverteilungskurve (LVK), wie sie bei Leuchten zur Ausleuchtung von Flächen beziehungsweise Flächenleuchten häufig gewünscht ist, nicht erreicht werden. Zudem kann auch die Formung des abgestrahlten Lichtkegels insbesondere bei Lichtquellen, die ungerichtetes Licht abgeben, wie beispielsweise organische Leuchtdioden (OLED), nicht ausreichend effizient und präzise sein.

Vor diesem Hintergrund ist es eine Aufgabe der vorliegenden Erfindung eine optische Schicht beziehungsweise eine Leuchte vorzuschlagen, die eine verhältnismässig hohe Effizienz in der Ausleuchtung einer Fläche ermöglicht und die bei ungerichteten oder teilweise gerichteten Lichtquellen effizient einsetzbar ist.

US 2013/0107575 A1 beschreibt eine Lichtleiterplatte gemäß einem anderen Beispiel des Standes der Technik und eine Beleuchtungsvorrichtung, die die Lichtleiterplatte verwendet.

### Darstellung der Erfindung

Die Aufgabe wird erfindungsgemäss durch eine optische Schicht gelöst, wie sie durch die Merkmale des unabhängigen Anspruchs 1 definiert ist, sowie durch eine Leuchte, wie sie durch die Merkmale des unabhängigen Anspruchs 9 definiert ist. Vorteilhafte Ausführungsvarianten der Erfindung ergeben sich aus den abhängigen Ansprüchen.

Das Wesen der Erfindung besteht im Folgenden: Eine optische Schicht aus einem lichtdurchlässigen Material umfasst eine Oberfläche und eine optische Mikrostruktur mit einer Vielzahl von Erhebungen. Die Erhebungen der Mikrostruktur stehen von einer Referenzebene ab, die parallel zur Oberfläche liegt. Die Erhebungen der Mikrostruktur weisen jeweils einen an die Referenzebene angrenzenden Flankenabschnitt auf, der einen einheitlichen Winkel mit der Referenzebene beschreibt. Der einheitliche Winkel liegt in einem Bereich von etwa 10° bis etwa 26° oder in einem Bereich von etwa 13° bis etwa 23° oder in einem Bereich von etwa 15° bis etwa 20°.

Die Oberfläche der optischen Schicht kann die Seite der Schicht sein, auf der sich die Erhebungen befinden. Oder es kann auch die entgegengesetzte Seite der optischen Schicht sein, die typischerweise eben ausgestaltet ist. In einer Ausführungsform kann sich die Oberfläche auf der Höhe der Spitzen der Erhebungen befinden. In diesem Fall ist die Referenzebene parallel und beabstandet zur Oberfläche. In einer anderen Ausführungsform kann die Oberfläche auch in der Referenzebene liegen. Die Oberfläche ist dann also parallel zur Referenzebene aber nicht von ihr beabstandet. Typischerweise erstreckt sich die Oberfläche sowie auch die Referenzebene quasi rechtwinklig zu einer Haupt- beziehungsweise Mittelabstrahlungsrichtung einer Leuchte, in der die optische Schicht eingesetzt wird. In vielen Anwendungen wie beispielsweise bei Deckenleuchten oder Stehleuchten ist die Haupt- beziehungsweise Mittelabstrahlungsrichtung vertikal und die Oberfläche beziehungsweise die Referenzebene liegt entsprechend horizontal. Die Erhebungen stehen dabei typischerweise von der Oberfläche ab.

Der Begriff "lichtdurchlässig" kann sich im Zusammenhang mit der optischen Schicht insbesondere auf eine gedämpfte oder ungedämpfte Durchlässigkeit des mittels eines Leuchtmittels einer Leuchte erzeugten Lichts beziehen.

Der Begriff "einheitlich" bezieht sich im Zusammenhang mit dem Flankenabschnitt einer der Erhebungen darauf, dass die Erhebung in Umfangrichtung einen einzigen, im Wesentlichen gleichen Winkel mit der Referenzebene beschreibt. Dabei können beispielsweise aus fertigungstechnischen Gründen auftretende Toleranzabweichungen vorhanden sein, die immer noch als einheitlich in diesem Sinne gelten. Beispielsweise können solche Toleranzabweichungen in einem Umfang von bis etwa 1° vorkommen.

Die erfindungsgemässe optische Schicht ermöglicht es einer Leuchte, auf wirksame Weise eine hohe Effizienz in eine Fläche zu bekommen beziehungsweise eine hohe Light Output Rate (LOR) zu erreichen. Gleichzeitig ermöglicht sie auch eine effektive und präzise Formung des von der Leuchte ausgestrahlten Lichts insbesondere auch, wenn die Leuchte eine ungerichtete oder teilweise gerichtete Leuchtquelle wie beispielsweise eine oder mehrere organische Leuchtdioden (OLED) aufweist. Dabei kann über den einheitlichen Winkel der Flankenabschnitte der Erhebungen in den angegebenen Bereichen eine bevorzugte Lichtverteilungskurve (LVK) erzeugt werden. Beispielsweise kann das ausgestrahlte Licht auch asymmetrisch oder flügelartig geformt sein. Insbesondere kann die Leuchte auf diese Weise auch effizient entblendet werden.

Gemäss bekannter Normen wie beispielsweise der Norm Nr. DIN EN 12464-1 des Deutschen Instituts für Normung kann sich der Begriff "Entblendung" darauf beziehen, dass für bestimmte Anwendungen von Leuchten, das in einem für sämtliche Ausstrahlungswinkel, die grösser sind als 65°, gemessen gegen die nach unten gerichtete Vertikale, abgegebene Licht eine Leuchtdichte von 3'000 Candela pro Quadratmeter (cd/m²) nicht überschreiten darf.

Weiter kann die erfindungsgemässe optische Schicht aus ästhetischer Sicht vorteilhaft sein, da die Mikrostrukturen mit blossem Auge nur sehr eingeschränkt oder gar nicht wahrnehmbar sind. Dadurch kann ein unauffälliges sauberes Aussehen erreicht werden. Die verhältnismässig starke Entblendung und Lichtlenkung der optischen Schicht kann also ästhetisch nicht in Erscheinung treten, vielmehr kann die optische Schicht optisch einfach diffus erscheinen. Dies bietet viele Anwendungsmöglichkeiten in der Gestaltung beispielsweise bei der architekturintegrierten Beleuchtung. Auch können mit der gleichen Ästhetik unterschiedliche LVK realisiert sein. Auch das bei bekannten Optiken mit einer Makrostruktur auftretende "Kippbild" kann mit der optischen Schicht verhindert werden. Mit "Kippbild" kann in diesem Zusammenhang eine Wahrnehmung von Strukturen oder Geometrien gemeint sein. Insbesondere kann sich dieser Begriff darauf beziehen, dass das erzeugte Leuchtflächenbild in einem bestimmten Betrachtungswinkel plötzlich, das heisst abrupt und nicht fliessend, ändert.

Der Begriff "optische Schicht" im Sinne der Erfindung kann sich auf ein verhältnismässig grossflächiges, dünnes Gebilde beziehen. Solche Gebilde weisen typischerweise eine im Verhältnis zur Dicke viel grössere Oberfläche auf. Beispielsweise können solche Gebilde eine Dicke von weniger als 1 Millimeter (mm) und typischerweise weniger als 0,1 mm aufweisen. Die zugehörige Oberfläche kann quasi beliebig gross sein. Sie kann beispielsweise mindestens 5 Zentimeter (cm) auf 5 cm betragen. Damit ergibt sich bei der optischen Schicht ein Verhältnis von Oberfläche zu Dicke von mindestens etwa 25'000 oder typischerweise mindestens etwa 250'000.

In einer möglichen Ausführung ist die optische Schicht als eine integrale Schicht eines optischen Teils geformt. Beispielsweise kann ein solches optisches Teil eine transparente Optik sein. In einer solchen Optik kann die optische Schicht mit seiner Mikrostruktur direkt in einem festen oder auch formbaren Substrat der Optik ausgeformt sein. Dazu kann die Mikrostruktur beispielsweise in das Substrat der Optik geschliffen, gefräst oder mittels Laserablation erzeugt werden. Oder die gesamt Optik kann zusammen mit der optischen Schicht im Spritzguss beziehungsweise einem Spritz-Präge-Prozess hergestellt werden. In einer solchen einteiligen Optik ist die optische Schicht mitintegriert, was ein einfaches Handling und eine einfache Verwendung ermöglicht.

Erfindungsgemäss ist die optische Schicht als flexible Folie ausgebildet. Solche Folien können einfach und effizient hergestellt werden. Beispielsweise können sie verhältnismässig einfach auf die Form einer zugehörigen Optik oder einer anderen Komponente einer Leuchte zugeschnitten werden. Zudem können sie sich auch der Form der Optik oder Leuchte wie beispielsweise einer Krümmung anpassen. Weiter können solche Folien auch verhältnismässig robust sein, was eine einfache Handhabung in eine hohe Lebensdauer ermöglicht.

Optische Schichten insbesondere in Form von Folien können aus unterschiedlichen Materialien hergestellt sein. Insbesondere können Folien aus Kunststoff effizient und flexibel hergestellt werden. Dabei sind solche Folien vorzugsweise aus einem Material mit einem Brechungsindex in einem Bereich von etwa 1.3 bis etwa 1.7 wie beispielsweise aus einem Kunststoff wie einem Polycarbonat hergestellt. Alternative Kunststoffe können beispielsweise Polyethylen oder Polymethylmethacrylat sein. In diesem Zusammenhang wird unter dem Begriff "Brechungsindex" eine optische Materialeigenschaft verstanden, die angibt, um welchen Faktor die Wellenlänge und die Phasengeschwindigkeit des Lichts im Material kleiner sind als im Vakuum. In Kombination mit dem erfindungsgemässen einheitlichen Winkel ermöglichen Folien aus solchen Materialien ein besonders effizientes Erreichen der vorstehend beschriebenen Effekte und Vorteile der Erfindung.

Folien aus Kunststoff beziehungsweise Polycarbonat können in effizienter und präziser Weise mit Mikrostrukturen der erfindungsgemässen Art versehen werden. Beispielsweise können solche Mikrostrukturen mittels Laserablation, Heissprägung, Ultraviolett-Casting, Spritzguss, Pressformung oder einem generativ aufbauendem Verfahren wie 3D-Printing auf beziehungsweise in den Kunststoff geformt werden. Bei in Serie hergestellten Folien kann es auch zweckmässig sein, einen Master zu fertigen und die Folie durch Vervielfältigung beispielsweise im Roll-To-Roll-Verfahren herzustellen. Zur Fertigung des Masters mit der Mikrostruktur kann beispielsweise Laserablation, Fräsen beziehungsweise Mikrofräsen, Elektronenstrahl-Bearbeitung oder generatives Aufbauen wie 3D-Printing angewendet werden.

Vorzugsweise sind die Erhebungen der Mikrostruktur der optischen Schicht jeweils als ein Konus, ein Prisma, ein Kegel oder eine Pyramide ausgestaltet. Solche Formen ermöglichen eine geometrisch verhältnismässig einfache Ausgestaltung der Erhebungen mit jeweils eindeutig festgelegten Flankenabschnitten. Dadurch können die einheitlichen Winkel verhältnismässig einfach implementiert werden. Zudem kann dadurch eine LVK präzise vorbestimmt werden.

Bevorzugt weisen die Erhebungen der Mikrostruktur eine hexagonale Grundfläche auf. Unter dem Begriff "Grundfläche" kann im Zusammenhang mit den Erhebungen insbesondere der Querschnitt der Erhebung auf der Höhe der Referenzebene verstanden werden. Erhebungen mit hexagonalen Grundflächen können eine grosse beziehungsweise maximale Beschickung der optischen Schicht mit Erhebungen auf eine effiziente Weise ermöglichen. Zudem kann auch der Anteil an Zonen der optischen Schicht, die keine bestimmungsgemäss lichtformende Wirkung haben, minimiert werden. Dadurch kann die optische Schicht eine verhältnismässig grosse Effizienz hinsichtlich der lichtformenden beziehungsweise -richtenden Wirkung haben.

Erfindungsgemäß weisen die Erhebungen der Mikrostruktur der optischen Schicht eine abgerundete Spitze auf. Unter dem Begriff "Spitze" kann im Zusammenhang mit den Erhebungen ein Bereich Verstanden werden, welcher der Referenzebene abgewandt beziehungsweise maximal von dieser entfernt ist. Die Spitze einer Erhebung kann deren Grundfläche entgegengesetzt sein. Eine solche abgerundete Spitze kann helfen, unerwünschte Farbeffekte beziehungsweise Rainbow-Effekte zu minimieren oder zu verhindern. Dies kann dadurch erreicht werden, dass kantige Formen beziehungsweise Übergänge in der Mikrostruktur reduziert beziehungsweise vermieden werden. Dabei grenzen die abgerundeten Spitzen der Erhebungen bevorzugt jeweils an deren Flankenabschnitte an.

Vorzugsweise umfassen die Erhebungen jeweils eine beispielsweise der hexagonalen Grundfläche entsprechende Grundfläche, die einen maximalen Durchmesser aufweist, der in einem Bereich von etwa 5 µm bis etwa 250 µm oder in einem Bereich von etwa 50 µm bis etwa 200 µm oder in einem Bereich von etwa 150 µm bis etwa 190 µm liegt. Zudem weisen die Erhebungen bevorzugt jeweils eine Höhe auf, die in einem Bereich von etwa 5 µm bis etwa 100 µm oder in einem Bereich von etwa 20 µm bis etwa 80 µm oder in einem Bereich von etwa 30 µm bis etwa 60 µm liegt. Bei Erhebungen mit jeweils einer Grundfläche und einer Spitze kann die Höhe durch den Abstand zwischen Grundfläche und Spitze definiert sein. So dimensionierte Erhebungen als Mikrostruktur ermöglichen, dass die optische Schicht eine bevorzugte Wirkung erzeugt und gleichzeitig verhältnismässig effizient herstellbar ist.

Der einheitliche Winkel kann zwischen einzelnen Erhebungen oder zwischen Gruppen von Erhebungen unterschiedlich sein. Das heisst die erwähnten Winkel sind pro Erhebung einheitlich aber unter den Erhebungen variierend. Dies kann ein flexibles Anpassen einer LVK ermöglichen. Bevorzugt weisen jedoch alle Erhebungen der Mikrostruktur der optischen Schicht den gleichen einheitlichen Winkel auf. Der Begriff "gleich" im Zusammenhang mit den einheitlichen Winkeln kann sich darauf beziehen, dass alle Erhebungen einen identischen einheitlichen Winkel aufweisen. Dabei können beispielsweise aus fertigungstechnischen Gründen auftretende Toleranzabweichungen vorkommen, die immer noch als gleich in diesem Sinne gelten. Beispielsweise können solche Toleranzabweichungen einen Wert in einem Umfang von bis etwa 1° betragen. Eine so ausgestaltete optische Schicht ermöglicht auf effiziente Weise eine homogene Erzeugung einer bevorzugten beziehungsweise bestimmungsgemässen Wirkung.

Ein weiterer Aspekt der Erfindung betrifft eine Leuchte mit einem Leuchtmittel und einer wie oben beschriebenen optischen Schicht. Mit dem Leuchtmittel ist Licht im Wesentlichen ungerichtet oder teilgerichtet abstrahlbar. Die optische Schicht deckt das Leuchtmittel in eine Abstrahlrichtung der Leuchte ab. Das Leuchtmittel kann beispielsweise eine OLED oder ein OLED-Feld sein. Oder es kann eine mit einer lichtstreuenden Optik ausgestattete Leuchtdiode beziehungsweise ein Feld von solchen Leuchtdioden sein.

Der Begriff "Leuchtdiode" kann synonym für lichtemittierende Diode oder Light Emitting Diode (LED) verstanden werden. Die Leuchtdioden können in einer Aufsicht beispielsweise rund, elliptisch, quadratisch oder rechteckig ausgestaltet sein. Sie können auf einer Platine befestigt sein, die zusätzlich mit einer Steuerungselektronik zum Betreiben der Leuchtdioden ausgestattet sein kann.

Der Begriff "Platine" kann sich in diesem Zusammenhang auf eine Leiterplatte (Printed Circuit Board, PCB) beziehen, die ein Träger für elektronische Bauteile ist. Im Allgemeinen dienen Platinen der mechanischen Befestigung und elektrischen Verbindung elektronischer Bauteile. Üblicherweise bestehen Leiterplatten beziehungsweise Platinen aus einem elektrisch isolierenden Material mit daran haftenden, leitenden Verbindungen (Leiterbahnen). Als isolierendes Material ist faserverstärkter Kunststoff gängig. Die Leiterbahnen werden zumeist aus einer dünnen Schicht Kupfer geätzt. Die Bauelemente werden auf Lötflächen (Pads) oder in Lötaugen gelötet. Grössere Komponenten können auch mit Kabelbindern, Klebstoff oder Verschraubungen auf der Platine befestigt werden.

Der Begriff "ungerichtet" im Zusammenhang mit dem Leuchtmittel der Leuchte kann sich darauf beziehen, dass Licht nicht vordefiniert in eine bestimmte Richtung abgestrahlt wird, sondern in einem gewissen Umfang in unterschiedlicher Richtung. Ungerichtetes Licht kann auch als diffuses Licht bezeichnet werden beziehungsweise solches umfassen. Insbesondere kann unter diesem Begriff verstanden werden, dass das Leuchtmittel Licht in einem gewissen Umfang in zufälliger beziehungsweise unbestimmter Richtung abstrahlt. Mitumfasst kann dabei auch ein teilweise gerichtetes Leuchten sein, solange ein Anteil an ungerichtetem Licht im vorstehenden Sinne vorhanden ist.

Mit einer erfindungsgemässen Leuchte können die oben im Zusammenhang mit der optischen Schicht erläuterten Effekte und Vorteile auf effiziente Weise realisiert sein. Dabei kann die optische Schicht integral in einer transparenten Optik implementiert sein. Oder sie kann auf einem festen Teil der Optik aufgebracht sein. Beispielsweise kann die optische Schicht auf das feste Teil aufgelegt sein oder an dieses angeklebt. Beim Verkleben der optischen Schicht auf das feste Teil der Optik ist zu beachten, dass der verwendete Kleber ebenfalls einen Brechungsindex aufweist. Um die Lichtgestaltung der optischen Schicht nicht zu beeinträchtigen wird vorzugsweise ein Kleber beziehungsweise ein Klebstoff mit einem Brechungsindex von möglichst nahe 1 verwendet. Insbesondere kann die Leuchte vorzugsweise als Flächenleuchte ausgebildet sein. Dabei kann sie ein Feld von OLEDs oder LEDs als Leuchtmittel aufweisen.

Die Leuchte kann gestapelt aufgebaut sein. Dabei kann die Lichtquelle durch einen Luftspalt von der optischen Schicht getrennt sein und so einen Stapel bilden. Oder die optische Schicht kann mit einem Klebstoff auf dem Leuchtmittel befestigt sein, sodass Leuchtmittel, Klebstoff und optische Schicht einen Stapel bilden. Eine solche gestapelte Konstruktion ermöglicht eine kompakte Bauweise.

Vorzugsweise ist die optische Schicht in der Leuchte unmittelbar benachbart zum Leuchtmittel angeordnet. Der Begriff "unmittelbar benachbart" kann sich in diesem Zusammenhang darauf beziehen, dass die optische Schicht so nahe wie technisch sinnvoll beziehungsweise machbar am Leuchtmittel liegt. Indem die optische Schicht mittels der erfindungsgemässen Mikrostruktur verhältnismässig dünn, beweglich und/oder flexibel ausgestaltet sein kann, ist es möglich, dass sie der Form der Leuchte oder bestimmter Komponenten davon angepasst ist. Dadurch kann die Leuchte äusserst kompakt sein, was in vielen Anwendungen vorteilhaft sein kann.

Die erfindungsgemässe optische Schicht und die erfindungsgemässe Leuchte können beispielsweise in den folgenden Anwendungsgebieten vorteilhaft sein beziehungsweise eingesetzt werden: Architektonische Beleuchtungsanwendungen, Theaterbeleuchtungsanwendungen und generelle Ausleuchtungsanwendungen. Die Anwendungsgebiete umfassen ebenfalls Unterwasserbeleuchtungsanwendungen beispielsweise in Schwimmbädern, Brunnen oder Wellness-Bädern, Verkehrsbeleuchtungsanwendungen, Fahrzeugbeleuchtungsanwendungen, medizinische Beleuchtungsanwendungen beispielsweise in Spitälern, Bürobeziehungsweise Schulbeleuchtungsanwendungen, Einzelhandel- beziehungsweise Einkaufsgeschäftsbeleuchtungsanwendungen und ganz generell industrielle Beleuchtungsanwendungen.

Die generellen Ausleuchtungsanwendungen wie vorstehend aufgeführt können Beleuchtungsanwendungen im Privaten, im Kommerziellen und im Industriellen sein. Dabei können folgende Charakteristika vorhanden sein: Es wird Licht im sichtbaren Bereich mit einer Wellenlänge von zwischen 350mm bis 850nm eingesetzt, die Beleuchtungen sind standardisiert und auswechselbar, die Beleuchtungen werden gemäss dem Standard IEC/PAS 62717 "Performance requirements - LED modules for general lighting" oder dem Standard "IEC/PAS 62722 Performance requirements - LED luminaries for general lighting" hergestellt, die Beleuchtungen umfassen eine Intelligenz wie beispielsweise Sensoren und Kommunikationszellen, um eine verbundene Beleuchtung bereitzustellen, und/oder die Beleuchtungen haben einen allgemeinen Leuchtzeck und können in die Typen funktional und dekorativ eingeteilt werden.

Die Verkehrsbeleuchtungsanwendungen wie vorstehend aufgeführt können fortgeschrittene Beleuchtungsanwendungen sein, mit denen beabsichtigt ist, Dienste anzubieten, die sich auf verschiedene Arten des Transports und des Verkehrsmanagements beziehen. Sie können ermöglichen, dass die unterschiedlichen Benutzer besser informiert sind und dass Netzwerke sicherer, koordinierter und schlauer verwendet werden. Beispielsweise kommen solche Verkehrsbeleuchtungsanwendungen in intelligenten Transportnetzwerken (ITS) in allen Arten des Transports vor. Dabei ist in der EU Richtlinie 2010/40/EU (7. July 2010) definiert, welche Informationen und Kommunikationstechnologien in ITS Systemen in Gebieten wie Strassentransport inklusive Infrastruktur, Fahrzeuge und Benutzer sowie in Verkehrs- beziehungsweise Mobilitätsmanagement und Schnittstellen für andere Transportarten angewendet werden.

Die Fahrezugbeleuchtungsanwendungen wie vorstehend aufgeführt können alle Beleuchtungsanwendungen sein, die Licht im Innern und Äussern von Personenfahrzeugen sowie leichten und schweren Nutzfahrzeugen bereit stellen. Beispielsweise können solche Anwendungen folgendes umfassen: Vorder- und Rückbeleuchtung, Sichtbarkeits-, Signal- und Identifikationslichter, Notfallwarngeräte, Innenraum- und Komfortbeleuchtung inklusive Verteilungsbeleuchtung sowie Im-Dienst-Fahrzeuge.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere werden im Folgenden die erfindungsgemässe optische Schicht und die erfindungsgemässe Leuchte unter Bezugnahme auf die beigefügten schematischen Zeichnungen anhand von Ausführungsbeispielen detaillierter beschrieben. Es zeigen:
- Fig. 1: eine perspektivische Ansicht eines Ausführungsbeispiels einer Folie als erfindungsgemässe optische Schicht;
- Fig. 2: eine Seitenansicht der Folie von Fig. 1;
- Fig. 3: eine perspektivische Ansicht eines Ausführungsbeispiels einer erfindungsgemässen Leuchte mit der Folie von Fig. 1; und
- Fig. 4: Frontansicht der Leuchte von Fig. 3.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel, wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Figuren und der zugehörigen Beschreibung der verschiedenen Aspekte und Ausführungsbeispielen zu vermeiden, sollen bestimmte Merkmale als gemeinsam für verschieden Aspekte und Ausführungsbeispiele verstanden werden. Das Weglassen eines Aspekts in der Beschreibung oder einer Figuren lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. Auch können die Grössenverhältnisse der in den Fig. dargestellten Teile von den wirklichen Grössenverhältnissen abweichen. Beispielsweise ist in den Figuren die Dicke beziehungsweise Höhe der Folie im Verhältnis zu deren Ausdehnung beziehungsweise Fläche vergrössert dargestellt. Insbesondere können bestimmte Ausdehnungen vergrössert dargestellt sein, damit einzelne Merkmale besser ersichtlich sind.

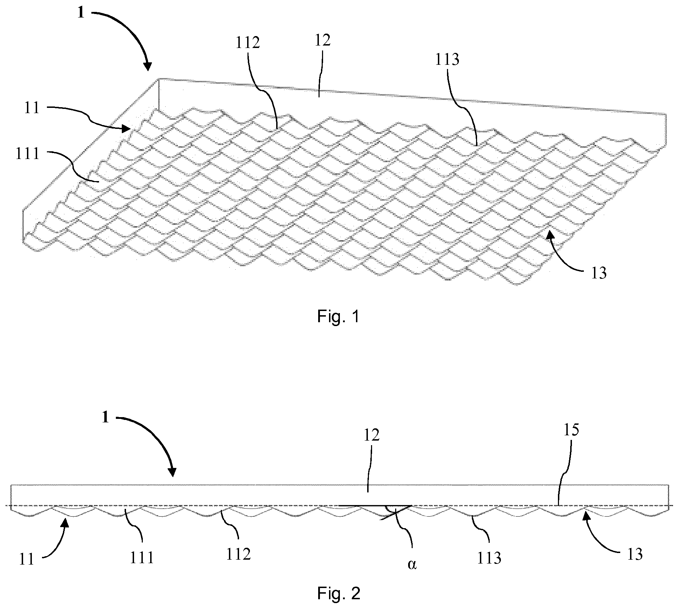

Fig. 1 zeigt schematisch eine Folie 1 als Ausführungsbeispiel einer erfindungsgemässen optischen Schicht. Die Folie 1 ist beispielsweise aus Polycarbonat als lichtdurchlässigem Material hergestellt. Sie umfasst einen flachen Basiskörper 12 und eine Oberfläche 13. Der flache Basiskörper 12 ist auf der Seite der Oberfläche 13 mit einer Mikrostruktur 11 ausgestattet, die eine Vielzahl von quasi hügelförmigen beziehungsweise quasi kegelförmigen Erhebungen 111 umfasst. Die Erhebungen 111 weisen Flankenabschnitte 112 auf, die jeweils in eine abgerundete Spitze 113 übergehen. Die Flankenabschnitte 112 grenzen dadurch an die zugehörigen abgerundeten Spitzen 113 an. Die Erhebungen 111 sind gleichförmig und gleichmässig über die Oberfläche 13 verteilt. Die Mikrostruktur 11 kann mittel Pressformung beispielsweise in einem Roll-To-Roll-Verfahren oder mittels Laserablation im Polycarbonat geformt sein.

Für die gesamte weitere Beschreibung gilt folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

Wie in Fig. 2 ersichtlich ist, weist die Folie 1 eine der Oberfläche 13 entsprechende Referenzebene 15 auf, von der die Erhebungen 111 der Mikrostruktur 11 abstehen. Die Flankenabschnitte 112 der Erhebungen 111 sind von der Seite her gerade ausgebildet. Sie grenzen an die Referenzebene 15 an beziehungsweise gehen von dieser aus. Die Flankenabschnitte 112 und die Referenzebene 15 beschreiben einen einheitlichen Winkel a, der über die ganze Folie 1 und den ganzen Umfang der einzelnen Erhebungen 111 konstant ist. Der einheitliche Winkel α beträgt 17°, wobei gewisse Toleranzabweichungen beispielsweise aus fertigungstechnischen Gründen vorhanden sein können.

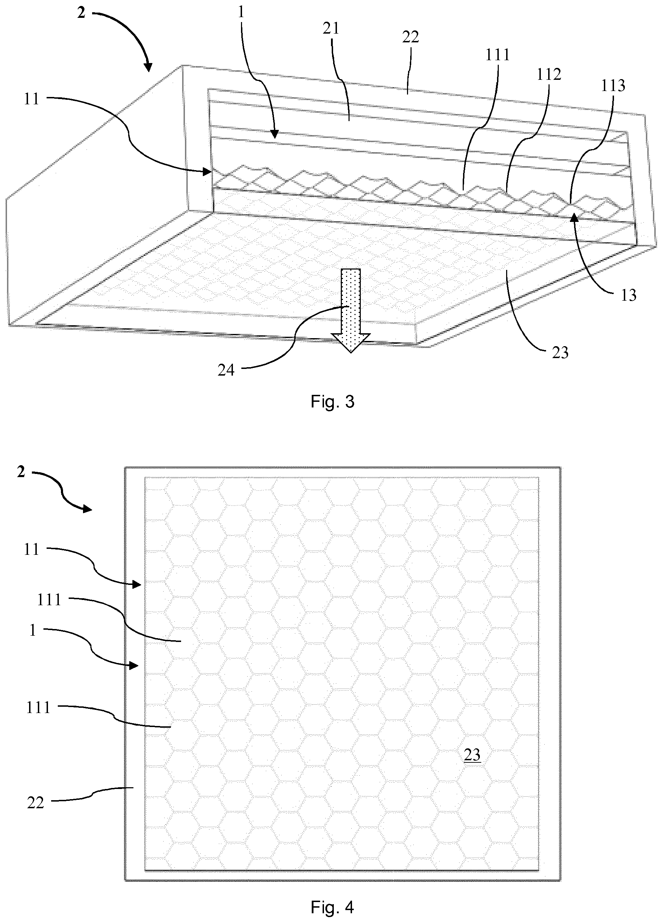

In Fig. 3 ist schematisch ein Ausführungsbeispiel einer erfindungsgemässen Leuchte 2 gezeigt, in der die Folie 1 angeordnet ist. Die Leuchte 2 ist als Deckenleuchte ausgebildet, die Licht in eine Abstrahlrichtung 24 vertikal nach unten abgibt. Die Leuchte 2 umfasst ein Gehäuse 22, in dem ein Leuchtmittel mit einer organischen Leuchtdiode (OLED-Leuchtmittel) 21 angeordnet ist. Das OLED-Leuchtmittel 21 strahlt Licht ungerichtet von seiner unteren Oberfläche ab. Ebenfalls im Gehäuse 22 ist die Folie 1 parallel zum OLED-Leuchtmittel 21 angebracht, wobei die Mikrostruktur 11 dem OLED-Leuchtmittel 21 abgewandt ist. Die Folie 1 deckt das OLED-Leuchtmittel 21 auf seiner lichtemittierenden unteren Oberfläche beziehungsweise in der Abstrahlrichtung 24 vollständig ab.

Nach unten hin ist das Gehäuse 22 von einer transparenten Optik 23 abgeschlossen. Die Optik 23 deckt die Folie 1 nach aussen hin ab. Im Betrieb der Leuchte 2 strahlt das OLED-Leuchtmittel 21 sein ungerichtetes Licht unterseitig ab. Dieses Licht durchdringt die Folie 1 und wird durch dessen Mikrostruktur 11 gerichtet und geformt. Insbesondere ermöglicht die Form der Erhebungen 111 mit dem einheitlichen Winkel α von 17°, dass eine hohe Lichteffizienz in die Fläche erzeugt werden kann beziehungsweise dass eine hohe Light Output Rate (LOR) erreicht werden kann. Gleichzeitig ermöglicht sie auch eine effektive und präzise Erzeugung einer bevorzugten Lichtverteilungskurve (LVK). Insbesondere kann die Leuchte 2 auf diese Weise auch ausreichend entblendet sein. Über die abgerundeten Spitzen 113 der Erhebungen 111 können zudem unerwünschte Rainbow-Effekte minimiert werden.

Fig. 4 zeigt die Leuchte 2 von unten beziehungsweise von ihrer Optik 23 her. Dabei ist durch die transparente Optik 23 hindurch ersichtlich, dass die Erhebungen 111 der Mikrostruktur 11 der Folie 1 eine hexagonale Grundform aufweisen. Eine solche Grundform ermöglicht, dass die Folie 1 dicht beziehungsweise vollständig mit Erhebungen 111 bestückt ist.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die blosse Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

1. Optische Schicht (1) aus einem lichtdurchlässigen Material, die eine Oberfläche (13) und eine optische Mikrostruktur (11) mit einer Vielzahl von Erhebungen (111) umfasst, wobei die Erhebungen (111) der Mikrostruktur (11) von einer Referenzebene (15) abstehen, die parallel zur Oberfläche (13) liegt, dass die optische Schicht (1) als flexible Folie ausgebildet ist und dass die Erhebungen (111) der Mikrostruktur (11) jeweils einen an die Referenzebene (15) angrenzenden Flankenabschnitt (112) aufweisen, der einen einheitlichen Winkel (a) mit der Referenzebene (15) beschreibt, wobei der einheitliche Winkel (a) in einem Bereich von etwa 10° bis etwa 26° oder in einem Bereich von etwa 13° bis etwa 23° oder in einem Bereich von etwa 15° bis etwa 20° liegt, wobei die Erhebungen (111) der Mikrostruktur (11) jeweils eine abgerundete Spitze (113) aufweisen, wobei die abgerundeten Spitzen (113) der Erhebungen (111) jeweils an die Flankenabschnitte (112) angrenzen und wobei die Flankenabschnitte (112) der Erhebungen (111) von der Seite her gerade ausgebildet sind.

2. Optische Schicht (1) nach Anspruch 1, bei der die Oberfläche (13) in der Referenzebene (15) liegt.

3. Optische Schicht (1) nach einem der vorangehenden Ansprüche, die aus einem Material mit einem Brechungsindex in einem Bereich von etwa 1.3 bis etwa 1.7 wie insbesondere aus Polycarbonat hergestellt ist.

4. Optische Schicht (1) nach einem der vorangehenden Ansprüche, bei der die Erhebungen (111) der Mikrostruktur (11) jeweils als Konus, Kegel, Prisma oder Pyramide ausgestaltet sind.

5. Optische Schicht (1) nach einem der vorangehenden Ansprüche, bei der die Erhebungen (111) der Mikrostruktur (11) eine hexagonale Grundfläche aufweisen.

6. Optische Schicht (1) nach einem der vorangehenden Ansprüche, bei der die Erhebungen (111) jeweils eine Grundfläche umfassen, die einen maximalen Durchmesser aufweist, der in einem Bereich von etwa 5 µm bis etwa 250 µm oder in einem Bereich von etwa 50 µm bis etwa 200 µm oder in einem Bereich von etwa 150 µm bis etwa 190 µm liegt.

7. Optische Schicht (1) nach einem der vorangehenden Ansprüche, bei der die Erhebungen (111) jeweils eine Höhe aufweisen, die in einem Bereich von etwa 5 µm bis etwa 100 µm oder in einem Bereich von etwa 20 µm bis etwa 80 µm oder in einem Bereich von etwa 30 µm bis etwa 60 µm liegt.

8. Optische Schicht (1) nach einem der vorangehenden Ansprüche, bei der alle Erhebungen (111) der Mikrostruktur (11) den gleichen einheitlichen Winkel (a) aufweisen.

9. Leuchte (2) mit einem Leuchtmittel (21) und einer optischen Schicht (1) nach einem der vorangehenden Ansprüche, wobei mit dem Leuchtmittel (21) Licht im Wesentlichen ungerichtet abstrahlbar ist und wobei die optische Schicht (1) das Leuchtmittel (21) in einer Abstrahlrichtung (24) der Leuchte (2) abdeckt.

10. Leuchte (2) nach Anspruch 9, die als Flächenleuchte ausgebildet ist.

11. Leuchte (2) nach Anspruch 9 oder 10, bei der die optische Schicht (1) unmittelbar benachbart zum Leuchtmittel (21) angeordnet ist.

## Claims

1. Optical layer (1) made from a light-permeable material including a surface (13) and an optical microstructure (11) having a plurality of elevations (111), wherein the plurality of elevations of the optical microstructure protrude from a reference plane (15) which is parallel to the surface (13), wherein the optical layer being configured as a flexible film and wherein the plurality of elevations of the optical microstructure each have a flank section (112) which adjoins the reference plane (15) and forms a uniform angle (a) with the reference plane (15), wherein the uniform angle (a) is in a range from about 10° to about 26° or in a range from about 13° to 23° or in a range from about 15° to 20°, wherein the plurality of elevations (111) of the optical microstructure (11) have a rounded peak (113), wherein the rounded peaks (113) of the plurality of elevations (111) each adjoin the flank sections (112), and wherein the flank sections (112) of the elevations (111) are formed straight from the side.

2. Optical layer (1) according to claim 1, in which the surface (13) is in the reference plane (15).

3. Optical layer (1) according to any of the preceding claims, wherein the optical layer (1) is produced from a material having a refractive index in a range from about 1.3 to about 1.7, as in particular polycarbonate.

4. Optical layer (1) according to any of the preceding claims, wherein the plurality of elevations (111) of the optical microstructure (11) are each designed as cones, tapers, prisms or pyramids.

5. Optical layer (1) according to any of the preceding claims, wherein the plurality of elevations (111) of the optical microstructure (11) have a hexagonal base area.

6. Optical layer (1) according to any of the preceding claims, wherein the plurality of elevations (111) each comprise a base area, which has a maximum diameter which is within a range from about 5 µm to about 250 µm or in a range from about 50 µm to about 200 µm or in a range from about 150 µm to about 190 µm.

7. Optical layer (1) according to any of the preceding claims, wherein the plurality of elevations (111) each have a height which is within a range from about 5 µm to about 100 µm or in a range from about 20 µm to about 80 µm or in a range from about 30 µm to about 60 µm.

8. Optical layer (1) according to any of the preceding claims, wherein all elevations (111) of the optical microstructure (11) have the same uniform angle (a).

9. Light fixture (2) having a lighting means (21) and an optical layer (1) according to any of the preceding claims, wherein light can be radiated in a substantially undirected manner by the lighting means (21) and wherein the optical layer (1) covers the lighting means (21) in a radiation direction (24) of the light fixture (2).

10. Light fixture (2) according to claim 9, wherein the light fixture (2) is formed as a surface light fixture.

11. Light fixture (2) according to claim 9 or 10, wherein the optical layer (1) is arranged immediately adjacent to the lighting means (21).

## Revendications

1. Couche optique (1) constituée d'un matériau perméable à la lumière et qui comprend une surface (13) et une microstructure optique (11) comportant une pluralité d'élévations (111), les élévations (111) de la microstructure (11) faisant saillie à partir d'un plan de référence (15), lequel est parallèle à la surface (13),
la couche optique (1) étant conçue comme un film flexible et
les élévations (111) de la microstructure (11) présentant respectivement une section de flanc (112) adjacente au plan de référence (15) et qui décrit un angle uniforme (a) avec le plan de référence (15), l'angle uniforme (a) étant situé dans une plage d'environ 10° à environ 26° ou dans une plage d'environ 13° à environ 23° ou dans une plage d'environ 15° à environ 20°,
les élévations (111) de la microstructure (11) présentant respectivement une pointe arrondie (113), les pointes arrondies (113) des élévations (111) étant respectivement adjacentes aux sections de flanc (112) et les sections de flanc (112) des élévations (111) étant rectilignes depuis le côté.

2. Couche optique (1) selon la revendication 1, dans laquelle la surface (13) se situe dans le plan de référence (15).

3. Couche optique (1) selon l'une des revendications précédentes, laquelle est réalisée à partir d'un matériau comportant un indice de réfraction compris dans la plage d'environ 1,3 à environ 1,7, en particulier à partir de polycarbonate.

4. Couche optique (1) selon l'une des revendications précédentes, dans laquelle les élévations (111) de la microstructure (11) sont respectivement conformées en tant que cône, prisme ou pyramide.

5. Couche optique (1) selon l'une des revendications précédentes, dans laquelle les élévations (111) de la microstructure (11) présentent une surface de base hexagonale.

6. Couche optique (1) selon l'une des revendications précédentes, dans laquelle les élévations (111) comprennent respectivement une surface de base qui présente un diamètre maximal compris dans une plage d'environ 5 µm à environ 250 µm ou dans une plage d'environ 50 µm à environ 200 µm ou dans une plage d'environ 150 µm à environ 190 µm.

7. Couche optique (1) selon l'une des revendications précédentes, dans laquelle les élévations (111) présentent respectivement une hauteur comprise dans une plage d'environ 5 µm à environ 100 µm ou dans une plage d'environ 20 µm à environ 80 µm ou dans une plage d'environ 30 µm à environ 60 µm.

8. Couche optique (1) selon l'une des revendications précédentes, dans laquelle toutes les élévations (111) de la microstructure (11) présentent le même angle uniforme (a).

9. Lampe (2) comportant un moyen lumineux (21) et une couche optique (1) selon l'une des revendications précédentes, dans laquelle de la lumière peut être émise de manière sensiblement non rectiligne à l'aide du moyen lumineux (21) et dans laquelle la couche optique (1) recouvre le moyen lumineux (21) dans une direction d'émission (24) de la lampe (2).

10. Lampe (2) selon la revendication 9, laquelle est conçue comme une lampe de surface.

11. Lampe (2) selon la revendication 9 ou 10, dans laquelle la couche optique (1) est disposée directement à côté du moyen lumineux (21).
